(19) Europäisches Patentamt
European Patent Office
Office européen des brevets

(11) **EP 4 510 210 A1**

(12) **EUROPEAN PATENT APPLICATION**
published in accordance with Art. 153(4) EPC

(43) Date of publication:
**19.02.2025 Bulletin 2025/08**

(21) Application number: **22963178.3**

(22) Date of filing: **28.10.2022**

(51) International Patent Classification (IPC):
*H01M 4/13* (2010.01)   *H01M 10/0587* (2010.01)

(52) Cooperative Patent Classification (CPC):
**H01M 4/13; H01M 10/0587**

(86) International application number:
**PCT/CN2022/128353**

(87) International publication number:
**WO 2024/087196 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **LIU, Zhi**
**Ningde, Fujian 352100 (CN)**
• **SHI, Dongyang**
**Ningde, Fujian 352100 (CN)**

• **CHENG, Zhipeng**
**Ningde, Fujian 352100 (CN)**
• **LV, Ruijing**
**Ningde, Fujian 352100 (CN)**
• **CHEN, Ning**
**Ningde, Fujian 352100 (CN)**
• **JIN, Haizu**
**Ningde, Fujian 352100 (CN)**
• **LI, Baiqing**
**Ningde, Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **POSITIVE ELECTRODE SHEET, ELECTRODE ASSEMBLY, SECONDARY BATTERY, AND ELECTRIC APPARATUS**

(57) A positive electrode plate, an electrode assembly, a secondary battery, and an electrical device are provided in the present application. Aperture(s) is/are arranged on an active substance layer configured to form a concave surface of the first bending layer so as to reduce the amount of usage of active substance layers of the positive electrode plate in the corner area. Due to this arrangement, the utilization of the electrode assembly formed by winding the positive electrode plate can reduce the amount of active substances on the concave surface of the first bending layer, such that a NP value between the concave surface of the first bending layer and the second bending layer formed by winding the negative electrode plate is increased, kinetics of lithium ions is improved, a problem of lithium precipitation that is prone to occur at the bending part during cyclic charging and discharging process is avoided, and the stability of performance of the secondary battery is guaranteed.

FIG. 5

**Description**

TECHNICAL FIELD

The present application relates to the technical field of batteries, and more particularly, to a positive electrode plate, an electrode assembly, a secondary battery and an electrical device.

BACKGROUND

With the widespread use of secondary batteries, the requirement on the stabilities of performances of the secondary batteries is becoming increasingly higher, especially for an electrode assembly that generates electrochemical reactions in a secondary battery, it needs to sustain a structural stability of the electrode assembly during cyclic charging and discharging. The electrode assembly may be divided into a laminated structure and a winded structure due to different preparation processes.

Regarding the winded structure, due to the limitat>ion of the deficiency of structural design of the traditional electrode plate, a problem of lithium precipitation of the electrode plate is prone to occur at a bending part during cyclic charging and discharging process, and degradation of the performance of the secondary battery is caused.

SUMMARY

In view of this, it is necessary to provide a positive electrode plate, an electrode assembly, a secondary battery and an electrical device to avoid the problem that the lithium precipitation of the electrode plate is prone to occur at the bending layer during cyclic charging and discharging process, and ensures the stability of performance of the secondary battery.

In a first aspect, a positive electrode plate is provided in the present application. The positive electrode plate has a plurality of corner areas spaced along a preset direction, when the positive electrode plate is wound in the preset direction, each corner area forms a first bending layer of the electrode assembly. The positive electrode plate includes a current collector; and active substance layers arranged on two opposite surfaces of the current collector. Where, the first bending layer has a concave surface, and aperture(s) is/are provided on the active substance layers for forming the concave surface in at least one corner area.

In accordance with the positive electrode plate, aperture(s) is/are provided on the active substance layer for forming the concave surface of the first bending layer, the usage of the active substance layers of the positive electrode plate in the corner area is reduced. Due to this arrangement, the utilization of the electrode assembly formed by winding the positive electrode plate reduces the amount of the active substances on the concave surface of the first bending layer. Thus, a NP value between the concave surface of the first bending layer and the second bending layer formed by winding the negative electrode plate is increased, kinetics of lithium ions is improved, a problem of lithium precipitation that is prone to occur at a bending part during cyclic charging and discharging process is avoided, and a stability of performance of the secondary battery is guaranteed.

In some embodiments, in the corner area being provided with the apertures, a number of the apertures is plural, and the plurality of apertures are distributed at intervals in the corner area where the apertures are currently located. Due to this arrangement, the plurality of apertures are arranged at intervals in the corner area, point locations of active materials are dispersed while the requirement of reduction of the amount of active substances needed in the corner area of the positive electrode plate is met, the active materials are prevented from being concentrated at one single aperture to form one single aperture with too large area, and the impact on the stability of the secondary battery due to occurrence of large-area and continuous inactive substances on the positive electrode plate is avoided.

In some embodiments, in the corner area being provided with the apertures, the apertures are arranged in a matrix in the corner area where the apertures are currently located. Due to this arrangement, the apertures in the corner area are arranged in matrix, dispersing of reduced point locations of the active substances in the corner area is facilitated, the stability of lithium ion insertion and extraction on the concave surface of the first bending layer is ensured, and the stability of the performance of the secondary battery is ensured accordingly.

**In** some embodiments, in the corner area being provided with the apertures, the sum of the volumes of the plurality of apertures is represented by V1, the volumes of the active substance layers in the corner area is represented by V2, and V1/V2 meets a condition of 1%≤V1/V2≤60%. In this way, V1/V2 is controlled to be between 1% and 60%, the influence of the energy density of the secondary battery due to excessive reduction of the amount of active substances excessive is avoided on the basis that the NP value is increased to improve kinetics of lithium ions insertion and extraction.

In some embodiments, V1/V2 also meets a condition of $(1 - \frac{A_0}{A_x} * \frac{R}{R+D_1+D_2+G}) \leq V1/V2 \leq 60\%$ . Where $A_0$ is a NP value of a straight part of the electrode assembly, and $1.0 \leq A_0 \leq 2.0$; $A_x$ is a NP value of a bending part of the electrode assembly after the apertures are arranged, and $1.0 \leq A_x \leq 2.0$. R is a radius of curvature of a middle part of the second bending layer located on the concave surface of the first bending layer; D1 is a thickness of each active substance layer of the first bending layer; D2 is a thickness of each active substance layer of the second bending layer; and G is a spacing between the first bending layer and the second bending layer. Due to this arrangement, $(1 - \frac{A_0}{A_x} * \frac{R}{R+D_1+D_2+G})$ is used as a lower limit value of V1/V2, which can ensure that NP at the bending part of the electrode assembly is greater than Ax, kinetics of insertion and extraction can be effectively improved, and the problem of lithium precipitation occurs at the bending part is avoided.

In some embodiments, in the corner area which is provided with the apertures, a sum of aperture areas of the plurality of apertures on the surface of the active substance layer is represented by C1, areas of the active substance layers in the corner area is represented by C2, and C1/C2 meets a condition of $1\% \leq C1/C2 \leq 70\%$. Due to this arrangement, C1/C2 is controlled to be between 1% and 70%, and the influence of the energy density of the secondary battery due to excessive reduction of the amount of active substances is avoided, on the basis that the NP value is increased to improve kinetics of lithium ion insertion and extraction.

In some embodiments, C1/C2 meets a condition of $$(1 - \frac{A_0}{A_x} * \frac{R}{R+D_1+D_2+G}) * \frac{D1}{H} \leq C1/C2 \leq 70\%$$, where $A_0$ is a NP value of a straight part of the electrode assembly, and $1.0 \leq A_0 \leq 2.0$; $A_x$ is a NP value of a bending part of the electrode assembly after the apertures are arranged, and $1.0 \leq A_x \leq 2.0$. R is a radius of curvature of a middle part of the second bending layer located on the concave surface of the first bending layer; D1 is a thickness of each active substance layer of the first bending layer; D2 is a thickness of each active substance layer of the second bending layer. G is a spacing between the first bending layer and the second bending layer. H is a depth of each aperture. Due to this arrangement, $(1 - \frac{A_0}{A_x} * \frac{R}{R+D_1+D_2+G}) * \frac{D_1}{H}$ is used as a lower limit value of V1/V2, this lower limit value can ensure that NP at the bending part of the electrode assembly is greater than $A_x$, such that kinetics of insertion and extraction can be effectively improved, and the problem of lithium precipitation occurs at the bending part is avoided.

In some embodiments, in the corner area being provided with the apertures, aperture areas of the apertures on the surface of the active substance layer is represented by S, and $0.000314 \text{ mm}^2 \leq S \leq 28.26 \text{ mm}^2$. Due to this arrangement, S is controlled to be between $0.000314 \text{ mm}^2$ and $28.26 \text{ mm}^2$. Thus, the problem of lithium precipitation of the secondary battery can not only be improved, the influence on the stability of the performance of the secondary battery due to too large aperture area can also be avoided.

In some embodiments, in the corner area being provided with the apertures, a depth of each of the aperture(s) on the active substance layer is represented by H, a thickness of an active substance layer where the aperture(s) is/are located is represented by D1, H<D1. Due to this arrangement, the depth of the aperture is controlled to be less than the thickness of the active substance layer, such that defects such as foil leakage on the positive electrode plate can be avoided, the stability of the performance of the secondary battery is ensured.

In a second aspect, an electrode assembly is provided in the present application, the electrode assembly is formed by winding positive electrode plates, negative electrode plates, and diaphragms spaced between the positive electrode plates and the negative electrode plates. The electrode assembly includes bending parts, each bending part includes first bending layers and second bending layers which are laminated alternately, and the second bending layers are configured to be formed by winding the negative electrode plates. Where, each of the positive electrode plates is any one of the aforementioned positive electrode plates.

In some embodiments, the electrode assembly further includes two bending parts, and the two bending parts are arranged on two opposite sides of the straight part, respectively. Due to this arrangement, an electrode assembly having a flat structure with two bending ends and one straight middle part is formed.

In the third aspect, a secondary battery is provided, the secondary battery includes the electrode assembly described above.

In the fourth aspect, an electrical device is provided, the electrode device includes the secondary battery described above.

The above descriptions are only the summary of the technical solutions of the present application. In order to understand the technical solutions of the present application more clearly, the technical solutions may be implemented in accordance with the contents of the specification. In order to make the above and other objectives, features, and advantages of the present application be more apparent and understandable, the embodiments of the present application are particularly described below.

DESCRIPTION OF THE DRAWINGS

By reading the detailed description of the preferable embodiments below, some other advantages and benefits will become clear and understandable to the person of ordinary skill in the art. The accompanying drawings are only intended to illustrate the objectives of the preferable embodiments and are not regarded as limitations to the present application. In all of the drawings, the same reference numeral is used to represent the same component. In the accompanying figures:

FIG. 1 illustrates a schematic structural diagram of an electrode assembly provided in some embodiments of the present application;

FIG. 2 illustrates a schematic structural diagram of a bending layer which is not provided with apertures, shown in FIG. 1;

FIG. 3 illustrates a schematic structural diagram of a vehicle provided in some embodiments of the present application;

FIG. 4 illustrates a schematic diagram of a disassembled structure of a secondary battery provided in some embodiments of the present application;

FIG. 5 illustrates a top view of a structure of an electrode plate provided in some embodiments of the present application;

FIG. 6 illustrates a cross-sectional diagram of a structure of a bending part which is provided with apertures in some embodiments of the present application;

FIG. 7 illustrates a first cross-sectional diagram of the electrode plate within the same corner area provided in some embodiments of the present application;

FIG. 8 illustrates a second cross-sectional diagram of the electrode plate within the same corner area provided in some embodiments of the present application;

FIG. 9 illustrates a third cross-sectional diagram of the electrode plate within the same corner area provided in some embodiments of the present application.

1000-electrical device; 100-secondary battery; 200-motor; 300-controller; 10-electrode assembly; 20-end cover; 30-electrode terminal; 40-housing; 1-positive electrode plate; 11-current collector; 12-aperture; 13-comer area; 14-straight area; 15-active substance layer; 2-positive electrode plate; 3-diaphragm; 4-straight part; 5-bending part; 51-first bending layer; 511-concave surface; 52-second bending layer; 521-convex surface; X-preset direction.

DETAILED DESCRIPTION OF EMBODIMENTS

The embodiments of the technical solutions of the present application are further described in detail with reference to the accompanying drawings. The following embodiments are only used to illustrate the technical solutions of the present application more clearly, and thus can only be used as examples, rather than being used to limit the scope of the present application.

Unless otherwise defined, all technical and scientific terms used herein have the same meaning as normally understood by the person skilled in the art. The terms used in the present application are only for the purpose of describing specific embodiments and are not intended to limit the present application. The terms "includes" and "has" in the description and claims of the present application and in the aforementioned description of drawings, and any variation thereof, are intended to cover non-exclusive inclusion.

In the descriptions of the embodiments of the present application, technical terms such as "the first" and "the second" are only for distinguishing different objects, rather than being interpreted as indicating or implying any relative importance or implicitly indicating the number, specific order or primary and secondary relation of indicated technical features. In the description of the present application, the term "a plurality of" indicates a number of at least two, unless otherwise the term "a plurality of" is explicitly and specifically defined.

Reference to "embodiments" in the present application means that a particular feature, structure or characteristic described with reference to the embodiments may be included in at least one embodiment of the present application. The occurrence of the phrase at various parts in the specification does not necessarily refer to the same embodiment, nor is it a separate or alternative embodiment being mutually exclusive with other embodiments. It is understood, both explicitly and implicitly, by those skilled in the art that the embodiments described herein may be combined with other embodiments.

In the claims and detailed description of embodiments of the present application, the term "and/or" is used to describe an association relationship of an associated object, represents that there may be three relationships, for example, A and/or B may represent three conditions: A exists alone, A and B coexist, B exists alone. In addition, the character "/" in the present application generally indicates that there is a "or" relationship between two continuous associated objects.

In the present application, "a plurality of" means more than two (including two). Similarly, "a plurality of groups" means more than two groups (including two groups), and "a plurality of sheets" means more than two sheets (including two sheets).

In the description of the embodiments of the present application, directions or location relationships represented by technical terms such as "center", "lengthwise", "crosswise", "length", "width", "thickness", "up", "down", "front", "rear", "left", "right", "vertical", "horizontal", "top", "bottom", "inside", "outside", "clockwise", "anticlockwise", "axial", "radial", "circumferential", etc., are the directions or location relationships shown in the accompanying figures, and are only intended to describe the present application conveniently and for the purpose of conciseness of description of the present application, but should not be interpreted as indicating or implying that a device or a component indicated by the terms must have specific locations and be constructed and manipulated according to the specific locations. Therefore, these terms shouldn't be considered as limitation to the present application.

In the present application, unless there is additional explicit stipulation and limitation, terms such as "mount", "connect with each other", "connect", "fix", and so on should be generalizedly interpreted, for example, "connect" may be interpreted as being fixedly connected, detachably connected, or connected integrally; "connect" can also be interpreted as being mechanically connected or electrically connected; "connect" may be further interpreted as being directly connected or indirectly connected through intermediary, or being internal communication between two components or an interaction relationship between the two components. The person of ordinary skill in the art may interpret the specific meanings of the aforementioned terms in the present application according to specific conditions.

Currently, based on the development of market trend, the application of power batteries is becoming more and more widespread. Power batteries are not only used in energy storage power systems such as hydropower, firepower, wind power, and solar power plants, but also widely used in electric driven transportation tools such as electric bicycles, electric motorcycles, and electric vehicles, and in various fields such as military equipment and aerospace. With the continuous expansion of the application field of power batteries, the market demand of the power batteries is continuously expanded, too.

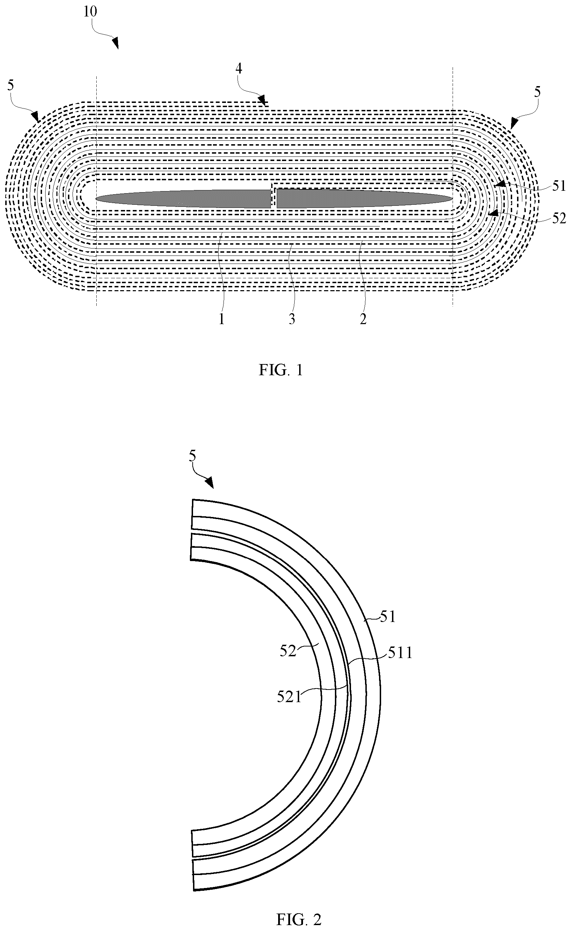

The applicant notes that, referring to FIG. 1, the electrode assembly 10 includes a straight part 4 and a bending part 5 arranged on two sides of the straight part 4 when it is constructed as a winding structure. Referring to FIG. 2, the bending part 5 includes multiple first bending layers 51 and second bending layers 52 that are alternately arranged and having different curvature radii. Each first bending layer 51 is formed by bending the corner area 13 of the positive electrode plate 1, each second bending layer 52 is formed by partially bending and winding the negative electrode plate 2. Taking one first bending layer 51 as an example, one side of a concave surface 511 of the first bending layer 51 corresponds to the second bending layer 52, that is, a concave surface 511 of the first bending layer 51 is opposite to the convex surface 521 of the second bending layer 52.

Since a radius of curvature of the concave surface 511 of the first bending layer 51 is greater than a radius of curvature of the convex surface 521 of the inner second bending layer 52, the amount of active substances of the concave surface 511 of the positive electrode plate 1 is greater than the amount of active substances of the convex surface 521 of the negative electrode plate 2, and a NP value corresponding to the amount of active substances of the concave surface 511 of the positive electrode plate 1 and the amount of active substances of the convex surface 521 of the negative electrode plate 2 is less than 1, which can be simply interpreted as lithium insertion vacancy concentration cannot meet the requirement of insertion of lithium ions, and a risk of lithium precipitation is prone to occur during charging.

On this basis, in order to solve the problem that the stability of performance of the secondary battery 100 is affected due to lithium precipitation at a bending part of the electrode assembly 10, Applicant has designed a positive electrode plate 1 after making a deep research, within at least one corner area 13, aperture(s) 12 is/are provided on an active substance layer 15 for forming the concave surface 511 of the first bending layer 51.

As for the positive electrode plate 1, the aperture(s) 12 is/are provided on the active substance layer 15 for forming the concave surface 511 of the first bending layer 51, the amount of usage of active substance layers 15 in the corner area 13 of the positive electrode plate 1 is reduced. In this way, the electrode assembly 10 formed by winding the positive electrode plate 1 reduces the amount of active substances on the concave surface 511 of the first bending layer 51. Since NP refers to a proportion of the amount of active substances per unit area of the negative electrode plate 2 to the amount of active substances per unit area of the positive electrode plate 1, the specific calculation formula is expressed as

$$NP=\frac{CW_A * Cap_A * Loading_A}{CW_C * Cap_C * Loading_C}$$ . Where, CW represents a weight per unit area of a coating material, with a unit of gram per square centimeter (g/cm2), Cap represents a gram capacity of active materials with a unit of milliampere hour per gram (mA-h/g), Loading represents a proportion of the active materials, a subscript A represents a negative electrode, and a subscript C represents a positive electrode. Thus, when the amount of the active substances of the concave surface 511 of the first bending layer 51 is decreased, a local NP value between the concave surface 511 of the first bending layer 51 and the second bending layer 52 formed by winding the negative electrode plate 2 may be increased, the kinetics of the lithium ions is improved, the problem of lithium precipitation at the bending part during cyclic charging and discharging process is avoided, and the stability of performance of the secondary battery 100 is guaranteed.

The secondary battery 100 disclosed in this embodiment of the present application may be, but is not limited to, an electrical device 1000 such as a vehicle, a ship, or an aircraft. A power system of an electrical device 1000 constituted of the secondary battery 100 disclosed in the present application may be used.

An electrical device 1000 that uses a battery as a power supply is provided in this embodiment of the present application. The electrical device 1000 may be, but is not limited to, a mobile phone, a tablet, a laptop, an electric toy, an electric tool, a storage battery car, a ship, spacecraft, etc. Where, the electric toy may include a fixed or a mobile electric toy, such as a game console, an electric car toy, an electric ship toy and an electric aircraft toy, etc. The spacecraft may include an aircraft, a rocket, a space shuttle and a spaceship, etc.

For the convenience of illustration, the present application is described by taking an electric device 1000 of one embodiment of the present application as a vehicle as an example.

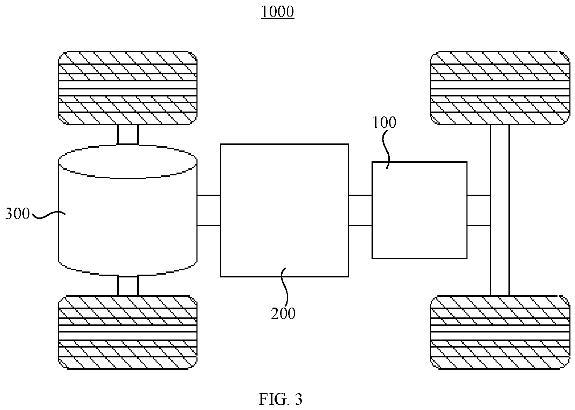

Referring to FIG. 3, FIG. 3 illustrates a schematic structural diagram of a vehicle provided in some embodiments of the present application. The vehicle may be a fuel powered vehicle, a gas powered vehicle, or a new energy vehicle. The new energy vehicle may be a pure electric vehicle, a hybrid electric vehicle, or an extended-range vehicle, etc. The interior of the vehicle is provided with a secondary battery 100, the secondary battery 100 may be arranged at the bottom, the head, or the rear of the vehicle. The secondary battery 100 may be used for supplying power for the vehicle. For example, the secondary battery 100 may be served as an operating power supply of the vehicle. The vehicle may also include a controller 300 and a motor 200, the controller 300 is used for controlling the secondary battery 100 to supply power to the motor 200. For example, the power supplied to the motor 200 is used for starting, navigation, and operation of the vehicle during driving.

In some embodiments of this application, the secondary battery 100 can not only serve as the operating source of the vehicle, but also serve as the driving source of the vehicle that replaces or partially replaces fuel or natural gas to provide driving power for the vehicle.

The number of secondary batteries 100 may be plural, and the plurality of secondary batteries 100 may be connected in series, in parallel, or in hybrid connection. The hybrid connection refers to the combination of series connection and parallel connection of the plurality of secondary batteries 100. The plurality of secondary batteries 100 may be directly connected in series, in parallel, or in the hybrid connection, and the integral structure composed of the plurality of secondary batteries 100 may be accommodated in the box. Certainly, the secondary batteries 100 may also be in the form of connecting the plurality of secondary batteries 100 in series, in parallel, or in hybrid connection firstly to form battery modules, and then connecting the multiple battery modules in series, in parallel, or in hybrid connection to form the integral structure and accommodating the integral structure in the box. The secondary battery 100 may also include other structures. For example, the secondary battery 100 may also include a current collecting component for achieving electrical connection among the plurality of secondary batteries 100. The secondary battery 100 may be shaped as a cylinder, a flat body, a cuboid or other shape.

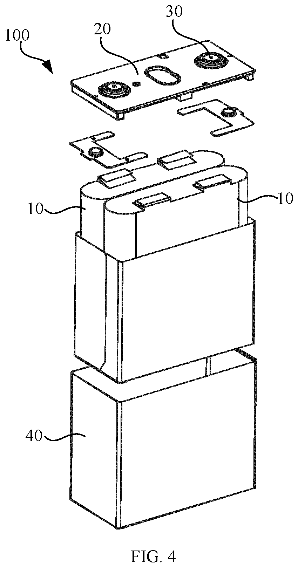

Referring to FIG. 4, FIG. 4 illustrates a schematic diagram of a disassembled structure of a secondary battery 100 provided in some embodiments of the present application. The secondary battery 100 refers to the smallest unit that constitutes a battery. As shown in FIG. 4, the secondary battery 100 includes an end cover 20, a housing 40, an electrode assembly 10, and other functional components.

The end cover 20 refers to a component that is covered on the opening of the housing 40 in order to isolate the internal environment of the secondary battery 100 from the external environment. In a nonrestrictive embodiment, a shape of the end cover 20 may adapt to a shape of the housing 40 so as to match with the housing 40. Optionally, the end cover 20 may be made of a material having certain hardness and strength (e.g., aluminum alloy). In this way, the end cover 20 is not prone to be deformed when it is squeezed and collided, the secondary battery 100 is enabled to possess higher structural strength and improved safety performance. A functional component such as an electrode terminal 30 may be arranged on the end cover 20. The electrode terminal 30 may be configured to be electrically connected with the electrode assembly 10 to output or input electrical energy of the secondary battery 100. In some embodiments, the end cover 20 may also be provided with a pressure relief mechanism for releasing internal pressure when the internal pressure or temperature of the secondary battery 100 reaches a threshold value. The end cover 20 may also be made of various materials, such as copper, iron, aluminum, stainless steel, aluminum alloy, plastic, etc. The material of the end cover 20 is not particularly limited in the embodiments of the present application. In some embodiments, an insulating piece may also be arranged on an inner side of the end cover 20, the insulating piece may be used to isolate the electrical connection components in the housing 40 from the end cover 20 so as to reduce the risk of short circuiting. For example, the insulating piece may be a plastic, a rubber, etc.

The housing 40 is a component used to match with the end cover 20 to form an internal environment of the secondary battery 100, where the formed internal environment may be used to accommodate the electrode assembly 10, electrolyte, and other components. The housing 40 and the end cover 20 may be independent components, and an opening may be arranged on the housing 40, the end cover 20 is covered on the opening so as to form the internal environment for the secondary battery 100. In a nonrestrictive embodiment, it is also possible to integrate the end cover 20 with the housing 40. Specifically, the end cover 20 and the housing 40 may form a common connection surface before other components are accommodated in the housing. When it needs to encapsulate the interior of the housing 40, the end cover 20 is enabled to be covered on the housing 40. The housing 40 may be of various shapes and sizes, such as rectangle, cylinder, hexagonal prism, and the like. Specifically, the shape of the housing 40 may be determined according to the specific shape and the size of the electrode assembly 10. The housing 40 may be made of various materials, such as copper, iron, aluminum, stainless steel, aluminum alloy, plastic, etc., and the material of the housing 40 are not particularly limited in the embodiments of the present application.

The electrode assembly 10 is a component in the secondary battery 100 that participates in electrochemical reactions. The housing 40 may contain one or more electrode assemblies 10. The electrode assembly 10 is mainly formed by winding or laminating a positive electrode plate 1 and a negative electrode plate 2, and a diaphragm 4 is usually provided between the positive electrode plate 1 and the negative electrode plate 2. The parts of the positive electrode plate 1 and the negative electrode plate 2 which contain active substances are constituted as the main body of the electrode assembly 10, while the part of the positive electrode plate 1 and the part of the negative electrode plate 2 which do not contain active substances are constituted as tabs respectively. The positive tab and the negative tab may either be located at one end of the main body or be located at two ends of the main body respectively. During the charging and discharging process of the secondary battery 100, positive active substances and negative active substances react with the electrolyte, and the tabs are connected to the electrode terminal 30 to form a current circuit.

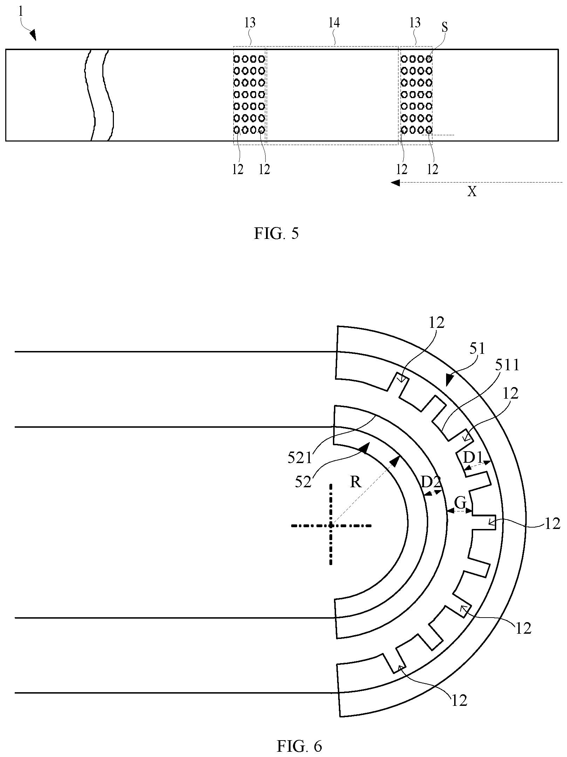

According to some embodiments of the present application, referring to FIG. 5 and FIG. 6, a positive electrode plate 1 is provided in the present application. The positive electrode plate 1 has a plurality of corner areas 13 spaced along a preset direction X. When the positive electrode plate 1 is wound in the preset direction X, each corner area 13 forms a first bending layer 51 of the electrode assembly 10. The positive electrode plate 1 includes a current collector 11 and active substance layers 15, and the active substance layers 15 are disposed on two opposite surfaces of the current collector 11. Where, the first bending layer 51 has a concave surface 511, and apertures 12 are provided on the active substance layer 15 for forming the concave surface 511 of the first bending layer 51 within at least one corner area 13.

A current collector 11 refers to a component that can not only support active substances, but also collect and output the current generated by electrode active substances. The materials of the current collector 11 are various. For example, the material of the current collector 11 may be a metal material such as, but is not limited to, aluminum and nickel. The material of the current collector 11 may also be a composite material such as conductive resin, titanium nickel shape memory alloy, and carbon coated aluminum foil.

An active substance layer 15 refers to the active substances coated on the current collector 11, and the materials of the active substance layer 15 are various. For example, the materials of the active substance layer 15 may be, but are not limited to, lithium cobalate, lithium manganate, lithium nickelate, lithium iron phosphate, ternary materials, etc.

A corner area 13 refers to multiple first bending layers 61 formed on some segments of the electrode plate 1 when the positive electrode plate 1 is wound along the first direction X, in the preparation process of the electrode assembly 10. The area of the positive electrode plate 1 corresponding to the first bending layer 61 is the corner area 13. Furthermore, the electrode assembly 10 formed by winding includes multiple bending parts 6 and each bending part 6 includes first bending parts 51 and second bending parts 52 that are alternatively laminated. Where the second bending part 52 is formed by bending a part of the negative electrode plate 2.

Several corner areas 13 are arranged at intervals on the current collector 11 along the first direction X, a straight area 14 is provided between two adjacent corner areas 13 and is opposite to a straight part 5 of the electrode assembly 10. Furthermore, the two adjacent corner areas 13 are located on different bending parts 6 of the electrode assembly 10 after winding. For the convenience of illustration, the two bending parts 6 of the electrode assembly 10 may be defined as a left bending part 6 and a right bending part 6, respectively. During winding, a first corner area 13 is wound on the left bending part 6, and a second corner area 13 is wound on the right bending part 6. Then, a third corner area 13 is wound around the left bending part 6, and a fourth corner area 13 is wound around the right bending part 6, etc. According to this arrangement, the remaining corner areas 13 are wound around different bending parts 6, respectively.

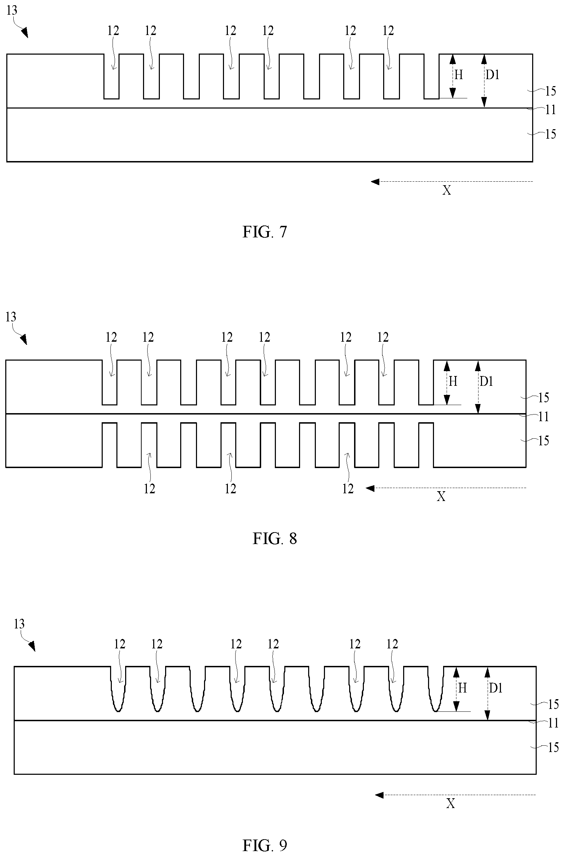

The apertures 12 refers to the structures formed by recessing the active substance layer 15 along the thickness direction thereof, which can reduce the coating amount of the active substance layers 15 on the current collector 11. The apertures 12 may be disposed on one active substance layer 15 on one side of the current collector 11, regarding this arrangement of the apertures 12, reference can be made to FIG. 7. The apertures 12 may also be disposed on the active substance layers 15 on two sides of the current collector 11, regarding this arrangement of the apertures 12, reference can be made to FIG. 8.

A depth of each aperture 12 on the positive electrode plate 1 may not be limited in this embodiment. Certainly, it is inappropriate to arrange the depth of the aperture 12 that penetrates through the current collector 11. If the depth of the aperture 12 penetrates through the current collector 11, the structural strength of the current collector 11 becomes weak, such that the positive electrode plate 1 is prone to be cracked in a cold pressing or circulation process.

The aperture 12 on the active substance layer 15 has various shapes of designs. For example, the aperture may be, but is not limited to, a circle, a square, an ellipse, or some irregular graphics, etc.

The electrode assembly 10 formed by winding the positive electrode plate 1 may reduce the amount of the active substances on the concave surface 511 of the first bending layer 51, such that the NP value between the concave surface 511 of the first bending layer 51 and the second bending layer 52 formed by winding the negative electrode plate 2 is increased, the dynamics of the lithium ions is improved, the problem of lithium precipitation that is prone to occur at the bending position during the cyclic charging and discharging process is avoided, and the stability of performance of the secondary battery 100 is guaranteed.

According to some embodiments of the present application, referring to FIG. 5, within the corner area 13 being provided with the apertures 12, the number of apertures 12 is plural, and all apertures 12 are distributed at intervals in the corner area 13 where the apertures 12 are currently located.

The spacing between one aperture 12 and another aperture 12 may not be particularly limited, it only needs to ensure that the apertures 12 are within the range of the corner area 13. Moreover, the spacing between one aperture 12 and another aperture 12 can be kept consistent or inconsistent. When the apertures 12 are uniformly distributed at intervals in the corner area 13, it can be ensured that the active substances on the concave surface 511 of the first bending layer 51 are uniformly distributed.

In the same corner area 13, the plurality of apertures 12 are distributed at intervals, and distribution manners of the apertures 12 are plural. For example, the plurality of apertures 12 may be arranged in a matrix, or in a concentric ring, or the like in the corner area 13. The plurality of apertures 12 may also be distributed densely and irregularly.

The plurality of apertures 12 are arranged at intervals in the corner area 13, on the premise of meeting the requirement of reduced amount of active substances in the corner area 13 of the positive electrode plate 1, the reduction points of the active substances are dispersed, so that the situation that the single-aperture areas is too large due to the fact that one open hole 12 is concentrated is avoided, and a situation that the stability of the secondary battery 100 is affected due to occurrence of large-area and continuous inactive substances on the positive electrode plate 1 is avoided.

According to some embodiments of the present application, referring to FIG. 5, in the corner area 13 being provided with the apertures 12, all apertures 12 are arranged in a matrix in the corner area 13 where the apertures 12 are currently located.

A matrix arrangement may be interpreted as a square array arrangement. For example, some apertures 12 are linearly arranged into a group at intervals along a preset direction X. Then, multiple groups of apertures 12 are arranged at intervals in a direction perpendicular to the preset direction X.

The apertures 12 in the corner area 13 are arranged in matrix, which is beneficial to dispersing reduced point positions of the active substances in the corner area 13, thereby ensuring stable lithium ion insertion and extraction on the concave surface 511 of the first bending layer 51, thereby ensuring the stability of the performance of the secondary battery 100.

According to some embodiments of the present application, in the corner area 13 being provided with the apertures 12, the sum of volumes of all apertures 12 is represented as V1, the volume of the active substance layer 15 in the corner area 13 is represented as V2, and V1/V2 meets a condition of $1\% \leq V1/V2 \leq 60\%$.

The sum of the volumes of all apertures 12 can be interpreted as the total reduction of the active substances in the corner area 13. It can be seen from the above NP calculation formula that when the amount of active substances on the positive electrode plate 1 is reduced, the NP value is increased. However, the active substances on the positive electrode plate 1 usually refer to a composite oxide containing lithium or lithium iron phosphate, and the increase or the decrease of the amount of the active substances will affect the energy density of the secondary battery 100.

Thus, V1/V2 is controlled to be between 1% and 60% in the present application. For example, V1/V2 may be, but is not limited to, 1% or 60%, etc.

V1/V2 is controlled to be between 1% and 60%, the influence of the energy density of the secondary battery 100 caused due to excessive reduction of the amount of active substances is avoided, on the basis of improving the NP value to improve the kinetics of lithium ion insertion and extraction.

According to some embodiments of the present application, with reference to FIG. 6, V1/V2 further meets the following condition of $(1 - \frac{A_0}{A_x} * \frac{R}{R+D_1+D_2+G}) \leq V1/V2 \leq 60\%$. Where, A0 is the NP value of the straight part 4 of the electrode assembly 10, and $1.0 \leq A_0 \leq 2.0$; Ax is the NP value of the bending part 5 of the electrode assembly 12 after the apertures are arranged, and $1.0 \le Ax \le 2.0$; R is the radius of curvature of the middle part of the second bending layer 52 located on the concave surface 511 of the first bending layer 51; D1 is the thickness of the active substance layer 15 of the first bending layer 51; D2 is the thickness of the active substance layer 15 of the second bending layer 52; and G is the spacing between the first bending layer 51 and the second bending layer 52.

NP refers to the ratio of the amount of the active substances per unit area on the negative electrode plate 2 to the amount of the active substances per unit area on the positive electrode plate 1, and the value of NP may be particularly calculated according to the following formula of $NP = \frac{CW_A * Cap_A * Loading_A}{CW_C * Cap_C * Loading_C}$ .

The straight part 4 and the bending parts 5 are respectively described as follows: after the positive electrode plate 1, the negative electrode plate 2 and the diaphragm 3 are wound to form the electrode assembly 10, the overall structure of the electrode assembly 10 is composed of three parts, that is, the middle large area structure and the bending structures at the two sides. Where, the middle large area structure is the straight part 4, and the bending structures are the bending parts 5. Each bending part includes a plurality of first bending layers 51 and second bending layers 52 which are alternately laminated.

The second bending layer 52 refers to the structure formed by bending and winding a part of the structure of the negative electrode plate 2. Since the negative electrode plate 2 also includes a current collector 11 and active substance layers 15, the radius of curvature of the middle part of the second bending layer 52 also refers to the radius of curvature of the current collector 11 of the negative electrode plate 2 after being bent.

$A_x$ refers to the NP value of the bending part 5 of the electrode assembly 10 after the apertures 12 are arranged, and may also be interpreted as an NP value between the first bending layer 51 provided with the apertures 12 and the inner second bending layer 52. Referring to FIG. 6, when calculating the NP value (i.e., $A_x$) between the first bending layer 51 provided with the apertures 12 and the second bending layer 52, the NP value may be calculated with reference to the NP (i.e., A0) of the straight part 4 (i.e., A0). For example,

$$A_x = \frac{R * \pi}{\left(R + D_{阳} + D_{阴} + G\right) * \pi * (1 - d)} * A_0.$$

Where, D is the ratio of the sum of the volumes of the apertures 12 to the volume of the active substance layer 15 in the corner area 13. Thus, it can be concluded according to the above formula that $d = \left(1 - \frac{A_0}{A_x} * \frac{R}{R + D_1 + D_2 + G}\right)$ .

If the value of V1/V2 is greater than or equal to D, it indicates that the NP value at the bending part 5 is greater than or equal to $A_x$ (e.g., any value between 1.0 and 2.0) in the actually formed electrode assembly 10.

According to this arrangement, $\left(1 - \frac{A_0}{A_x} * \frac{R}{R + D_1 + D_2 + G}\right)$ is used as the lower limit value of V1/V2, it can be ensured that the NP at the bending part 5 of the electrode assembly 10 is greater than $A_x$, the kinetics of insertion and extraction is effectively improved, and the problem of lithium precipitation at the bending part 5 is avoided.

According to some embodiments of the present application, in the corner area 13 being provided with the apertures 12, the sum of aperture areas of all apertures 12 on the surface of the active substance layer 15 is represented as C1, the area of the active substance layer 15 in the corner area 13 is represented as C2, and C1/C2 meets a condition of $1\% \le C1/C2 \le 70\%$.

The sum of the aperture areas of all apertures 12 on the surface of the active substance layer 15 can be interpreted as closed contours formed by the apertures 12 on the surface of the active substance layer 15, and the sum of areas of the closed contours of all apertures 12 is the sum of the aperture areas of the apertures 12.

In order to characterize the total reduction amount of the active substances in the corner area 13, the total reduction amount is determined by the sum of the aperture areas in the present application. Certainly, in order to facilitate the processing of the apertures 12, in some embodiments, the consistency between the aperture areas and the depths of the plurality of apertures 12 is ensured.

In the present application, C1/C2 is controlled between 1% and 70%. For example, C1/C2 may be, but is not limited to, 1% or 70%, etc., and it is ensured that the reduction amount of the active substances in corner area 13 is controlled within a reasonable range.

C1/C2 is controlled between 1% and 70%, and the energy density of the secondary battery 100 is prevented from being affected by excessive reduction of the amount of active substances on the basis of improving the NP value to improve the kinetics of the lithium ion insertion and extraction.

According to some embodiments of the present application, with reference to FIG. 6, C1/C2 further meets the

following condition of $$(1-\frac{A_0}{A_x}*\frac{R}{R+D_1+D_2+G})*\frac{D1}{H}\leqslant C1/C2\leqslant 70\%$$ . Where $A_0$ is an NP value of the straight part 4 of the electrode assembly 10, and $1.0\leq A_0\leq 2.0$; $A_x$ is the NP value of the bending part 5 of the electrode assembly 10 after the apertures 12 are arranged, and $1.0\leq A_x\leq 2.0$; R is the radius of curvature of the middle part of the second bending layer 52 located on the concave surface 511 of the first bending layer 51, D1 is the thickness of the active substance layer 15 of the first bending layer 51; D2 is the thickness of the active substance layer 15 of the second bending layer 52; G is the spacing between the first bending layer 51 and the second bending layer 52; H is the depth of each aperture 12.

Referring to FIG. 6, when calculating the NP value (i.e., $A_x$) between the first bending layer 51 provided with the apertures and the second bending layer 52, the NP value may be calculated with reference to the NP (i.e., $A_0$) at the straight part 4, for example, $A_x$ =

$$\frac{R*\pi}{(R+D_{阳}+D_{阴}+G)*\pi*\left(1-\frac{H}{D_1}*C\right)}*A_0.$$

Wherein, C is the ratio of the sum of the aperture areas of the apertures 12 to the area of the active substance layer 15 in the corner area 13. Thus, it can be concluded according to the above formula that $$c=(1-\frac{A_0}{A_x}*\frac{R}{R+D_1+D_2+G})*\frac{D_1}{H}$$ .

If the value of C1/C2 is greater than or equal to D, it indicates that the NP value at the bending part 5 of the actually formed electrode assembly 10 is greater than or equal to $A_x$ (e.g., any value between 1.0 and 2.0).

According to this arrangement, $$(1-\frac{A_0}{A_x}*\frac{R}{R+D_1+D_2+G})*\frac{D_1}{H}$$ is used as the lower limit value of C1/C2, which can ensure that the NP at the bending part 5 of the electrode assembly 10 is greater than $A_x$, the kinetics of insertion and extraction is effectively improved, and the problem of lithium precipitation occurs at the bending part 5 is avoided.

According to some embodiments of the present application, referring to FIG. 5, in the corner area 13 being provided with the apertures 12, the apertures areas of the apertures 12 on the surface of the active substance layer 15 is represented as S, 0.000314 square millimeters ($mm^2$)$\leq$S$\leq$28.26 $mm^2$.

The aperture area of one single aperture 12 on the active substance layer 15 may be kept consistent or consistent. However, the value of the aperture area needs to be selected between 0.000314 $mm^2$ and 28.26 $mm^2$. For example, S may be, but is not limited to, 0.000314 $mm^2$ or 28.26 $mm^2$, or the like.

The shape of one single aperture 12 on the active substance layer 15 may have various designs. For example, the shape of the aperture 12 may be, but is not limited to, a circle, an ellipse, a triangle, a quadrangle, and the like. When the aperture shape of the one single aperture 12 is circular, the value of the diameter of the aperture 12 may be between 0.01 millimeter (mm) and 3 mm.

If the aperture area of the one single aperture 12 is too small, in order to achieve the reduction amount of the active substances, the number of apertures 12 needs to be increased, and the processing workload is increased. If the aperture area of the one single aperture 12 is too large, a larger recessed structure is formed in the corner area 13, which is equivalent to a flaw on the positive electrode plate 1, the performance of the secondary battery 100 is affected.

S is controlled between 0.000314 $mm^2$ and 28.26 $mm^2$, which can not only improve the problem of the lithium precipitation of the secondary battery 100, but also avoid the influence on the stability of the performance of the secondary battery 100 due to excessively large aperture area.

According to some embodiments of the present application, referring to FIG. 7, in the corner area 13 being provided with the aperture(s) 12, the depth of each of the aperture(s) 12 on the active substance layer 15 is represented as H, the thickness of the active substance layer 15 where the aperture(s) 12 is/are located is represented as D1, H<D1.

H<D1, it indicates that the apertures 12 do not penetrate through the active substance layer 15 where the apertures 12 are located, that is, after the apertures 12 are provided, no foil leakage (i.e., foil does not leak out from the current collector 11) occurs on the positive electrode plate 1. The specific value of H may be determined according to the actual size of the positive electrode plate 1.

The apertures 12 have various extension shapes along the thickness direction of the positive electrode plate 1.For example, the shape in cross section reveals a square shape, an oval shape, etc. Regarding the shapes of the apertures 12, reference can be made to FIG. 7 and FIG. 9.

The depths of the apertures 12 are controlled to be less than the thickness of the active substance layer 15, defects such as foil leakage on the positive electrode plate 1 are avoided, and the stability of performance of the secondary battery 100 is better ensured.

According to some embodiments of the present application, an electrode assembly 10 is provided in the present application. The electrode assembly is formed by winding positive electrode plates 1, negative electrode plates 2, and diaphragms 3 spaced between the positive electrode plates 1 and the negative electrode plates 2. The electrode assembly 10 includes bending parts 5, and each bending part 5 includes first bending layers 51 and second bending layers 52 which are alternately laminated. Each second bending layer 52 is configured to be formed by winding a part of the negative electrode plate 2. Where, the positive electrode plate 1 is the positive electrode plate 1 according to any one of the positive electrode plates 1 described above.

The second bending layer 52 refers to the structure formed by bending and winding a part of the structure of the negative electrode plate 2. Since the radius of curvature of the concave surface 511 of the first bending layer 51 is greater than the radius of curvature of the convex surface 521 of the second bending layer 52, the local NP at the position between the convex surface 521 of the second bending layer 52 and the concave surface 511 of the first bending layer 51 is usually less than 1, and the problem of lithium precipitation is prone to occur.

The positive electrode plate 1 is used in the electrode assembly 10 to reduce the amount of the active substances on the concave surface 511 of the first bending layer 51, such that the NP value between the concave surface 511 of the first bending layer 51 and the second bending layer 52 formed by winding the negative electrode plate 2 is increased, the kinetics of lithium ion insertion and extraction is improved, the problem of lithium precipitation that is prone to occur at the bending part during the cyclic charging and discharging process is avoided, and the stability of performance of the secondary battery 100 is ensured.

According to some embodiments of the present application, referring to FIG. 1, the electrode assembly 10 further includes a straight part 4 and two bending parts 5, and the two bending parts 5 are disposed on two opposite sides of the straight part 4, respectively.

The straight part 4 refers to a component corresponding to a large surface area of the flat-shaped electrode assembly 10, and the straight part 4 is formed by alternately laminating straight areas 14 of a plurality of positive electrode plates 1 and a plurality of negative electrode plates 2.

Due to this arrangement, the electrode assembly 10 having a flat structure with two bending parts and one straight middle part is formed.

According to some embodiments of the present application, a secondary battery 100 is provided in the present application, the secondary battery 100 includes the aforementioned electrode assembly 10.

According to some embodiments of the present application, an electrical device 1000 is provided in the present application, the electrical device 1000 includes the aforementioned secondary battery 100.

According to some embodiments of the present application, referring to FIGS. 5-9, a positive electrode plate 1 is provided in the present application. The position of the corner area 13 of the positive electrode plate 1 is determined according to a winding size of the electrode assembly 10. Then, apertures 12 are arranged at intervals in the corner area 13, the shapes and the arrangements of the apertures 12 are not limited, and a range of a diameter size of the one single aperture 12 is between 0.01 mm and 3 mm. Generally, the apertures 12 are only provided in the corner area 13 of the positive electrode plate 1, that is, the apertures 12 are arranged on one side. As an alternative, the apertures 12 can also be provided at two sides. The depths of the apertures 12 are less than the thickness of the active substance layer 15, that is, the apertures cannot penetrate through the current collector 11.

In order to make the objective, the technical solutions, and the advantages of the present application be more concise and clearer, the present application is further described with reference to the following embodiments. However, the present application is not limited to these embodiments. The embodiments described hereinafter are only preferable examples of the present application and may be used to describe the present application, and cannot be interpreted as limiting the scope of the present application. It should be noted that any modification, equivalent replacement, and improvement made within the spirit and the principle of the present application, should all be included in the scope of protection of the present application.

In order to describe the present application much better, the contents of the present application will be further described with reference to the embodiments. The embodiments are described below.

Comparative example 1:

Positive electrode plate 1:

A ternary material of nickel cobalt manganese (NCM811), a conductive agent acetylene black, and an adhesive polyvinylidene fluoride (PVDF) are mixed in a mass ratio of 97:2:1 and are added to a solvent NMP to prepare a positive electrode slurry; the positive electrode slurry are evenly coated on an aluminum foil, and are dried at 85 °C, and a cold pressing is performed on the aluminum foil. Then, die-cutting and subsection are performed on the aluminum foil to form the positive electrode plate 1 of a lithium-ion battery.

Where, a coating weight of the active substances on the positive electrode plate 2 is 17.6 milligrams per square centimeter (mg/cm$^2$), and a thickness of the active substance layer 15 on the positive electrode plate 2 is 50 μm. The corner area 13 of the positive electrode plate 1 is not provided with apertures 12.

Negative electrode plate 2:

A negative active substance graphite, a conductive agent acetylene black, a thickening agent sodium hydroxymethyl cellulose (CMC), and an adhesive Styrene-butadiene (SBR) are added into a solvent water in a mass ratio of 96:2:1:1, they are mixed evenly to prepare a negative paste; the negative electrode slurry are coated evenly on a copper foil, are dried at 85 °C. Then, a cold pressing is performed on the copper foil to form the negative electrode plate 2.
Where a coating weight of the negative electrode plate 2 is 10 mg/cm$^2$, and a thickness of the active substance layer 15 of the negative electrode plate 3 is 61 $\mu$m.

Diaphragm 4:

Polyethylene microporous film is used as a porous isolation film substrate. Inorganic alumina powder, a polyethylene pyrrolidone, and an acetone solvent are mixed evenly in a weight ratio of 3:1.5:5.5 to prepare a slurry, the slurry is coated on one side of the substrate and is dried to obtain diaphragm.

Electrolyte:

Lithium hexafluorophosphate is dissolved in a mixed solvent of ethylene carbonate, dimethyl carbonate and methyl ethyl carbonate (a volume ratio of the ethylene carbonate, the dimethyl carbonate and the methyl ethyl carbonate is 1:2:1) to prepare the electrolyte of a lithium ion battery.

Preparation of a secondary battery 100:

The positive electrode plate 1, the negative electrode plate 2, and the diaphragm are wound to obtain a bare cell; then, processes such as packaging, liquid injection, formation, and ventilation are performed on the bare cell to prepare the lithium-ion battery. The NP value $A_0$ of the straight part 4 of the battery is 1.05, the spacing between the first bending layer 51 and the second bending layer 52 is 60 $\mu$m, the radius of curvature of the middle part of the second bending layer 52 is 141 $\mu$m, and the designed cell capacity is 160 Ah.

Comparative example 2

The comparative example 2 and the comparative example 1 are substantially the same, the difference between them only lies in: the spacing between the first bending layer 51 and the second bending layer 52 is 40 $\mu$m, and the radius of curvature of the middle part of the second bending layer 52 is 402 $\mu$m.

Comparative example 3

The comparative example 3 and the comparative example 1 are substantially the same, the difference between them only lies in: the spacing between the first bending layer 51 and the second bending layer 52 is 20 $\mu$m, and the radius of curvature of the middle part of the second bending layer 52 is 663 $\mu$m.

Comparative example 4

The comparative example 4 and the comparative example 1 are substantially the same, the difference between them only lies in: the spacing between the first bending layer 51 and the second bending layer 52 is 10 $\mu$m, and the radius of curvature of the middle part of the second bending layer 52 is 924 $\mu$m.

Embodiment 1

The embodiment 1 and the comparative example 1 are substantially the same, the difference between them only lies in: the apertures 12 are uniformly arranged in the corner area 13 of the positive electrode plate 1, the depth of one single aperture 12 is 45 $\mu$m, the sum of the aperture areas of the apertures 12 is 53%, the spacing between the first bending layer 51 and the second bending layer 52 is 60 $\mu$m, and the curvature radius of the middle part of the second bending layer 52 is 141 $\mu$m.

Embodiment 2

Embodiment 2 is substantially the same as the embodiment 1, the difference between them only lies in: the sum of the aperture areas of the apertures 12 is 61%.

Embodiment 3

Embodiment 3 is substantially the same as the embodiment 1, the difference between them only lies in: the sum of the aperture areas of the apertures 12 is 17%, the spacing between the first bending layer 51 and the second bending layer 52 is 40 $\mu$m, and the radius of curvature of the middle part of the second bending layer 52 is 402 $\mu$m.

Embodiment 4

Embodiment 4 is substantially the same as the embodiment 3, the difference between them only lies in: the sum of the aperture areas of the apertures 12 is 30%.

Embodiment 5

Embodiment 5 is substantially the same as the embodiment 1, the difference between them only lies in: the sum of the aperture areas of the apertures 12 is 3%, the spacing between the first bending layer 51 and the second bending layer 52 is 20 $\mu$m, and the radius of curvature of the middle part of the second bending layer 52 is 663 $\mu$m.

Embodiment 6

Embodiment 6 is substantially the same as the embodiment 5, the difference between them only lies in: the sum of the aperture areas of the apertures 12 is 18%.

Embodiment 7

Embodiment 7 is substantially the same as the embodiment 1, the difference between them only lies in: the sum of the aperture areas of the apertures 12 is 3%, the spacing between the first bending layer 51 and the second bending layer 52 is 10 $\mu$m, and the radius of curvature of the middle part of the second bending layer 52 is 924 $\mu$m.

Embodiment 8

Embodiment 8 is substantially the same as the embodiment 7, the difference between them only lies in: the sum of the aperture areas of the apertures 12 is 13%.

The secondary battery 100 prepared by using the comparative examples and the embodiments are used, the battery cell is disassembled after it is charged to 4.25 V under the constant-current constant voltage of 1.0 C, whether lithium precipitation occurs at the convex surface 521 of the second bending layer 52 is observed.

When the apertures 12 are arranged, according to a relational expression

$$(1 - \frac{A_0}{A_x} * \frac{R}{R+D_1+D_2+G}) * \frac{D1}{H} \leqslant C1/C2 \leqslant 70\%,$$

a reference value of aperture area ratio that should be arranged in the corner area 13 of the positive electrode plate 1 is calculated. Due to the fact that lithium precipitation may be effectively avoided when NP is greater than 1, thus, calculations are performed by assigning the value of $A_x$ in the relational expression as 1. Regarding the calculation result, reference can be made to table 1.

Table 1

| Group Number | Radius of curvature R ($\mu$m) | Preset value of $A_x$ | Spacing G ($\mu$m) | Reference value of the proportion of the aperture areas of the apertures 12 (%) |
|---|---|---|---|---|
| Comparative example 1 | 141 | 1 | 60 | - |
| Comparative example 2 | 402 | 1 | 40 | - |
| Comparative example 3 | 663 | 1 | 20 | - |
| Comparative example 4 | 924 | 1 | 10 | - |
| Embodiment 1 | 141 | 1 | 60 | 58.4%~70% |
| Embodiment 2 | 141 | 1 | 60 | 58.4%~70% |

(continued)

| Group Number | Radius of curvature R ($\mu$m) | Preset value of $A_x$ | Spacing G ($\mu$m) | Reference value of the proportion of the aperture areas of the apertures 12 (%) |
|---|---|---|---|---|
| Embodiment 3 | 402 | 1 | 40 | 26.3%~70% |
| Embodiment 4 | 402 | 1 | 40 | 26.3%~70% |
| Embodiment 5 | 663 | 1 | 20 | 1.37%~70% |
| Embodiment 6 | 663 | 1 | 20 | 13.7%~70% |
| Embodiment 7 | 924 | 1 | 10 | 7.95%~70% |
| Embodiment 8 | 924 | 1 | 10 | 7.95%~70% |

The actual NP value between the first bending layer 51 and the second bending layer 52 is obtained according to different comparative examples and different embodiments, and the condition of lithium precipitation occurs at the convex surface 521 of the second bending layer 52 is recorded. Regarding the condition of lithium precipitation, reference can be made to table 2 specifically.

Table 2

| Group Number | Calculation value of the proportion of aperture areas of the apertures 12 | The actual proportion of aperture areas of the apertures 12 | The actual NP value of bending part 5 | Whether lithium precipitation occurs at the second bending layer 52 |
|---|---|---|---|---|
| Comparative example 1 | - | 0% | 0.47 | Yes |
| Comparative example 2 | - | 0% | 0.76 | Yes |
| Comparative example 3 | - | 0% | 0.88 | Yes |
| Comparative example 4 | - | 0% | 0.93 | Yes |
| Embodiment 1 | 58.4%-70% | 53% | 0.90 | Yes |
| Embodiment 2 | 58.4%-70% | 61% | 1.05 | No |
| Embodiment 3 | 26.3%-70% | 17% | 0.90 | Yes |
| Embodiment 4 | 26.3%-70% | 30% | 1.05 | No |
| Embodiment 5 | 13.7%-70% | 3% | 0.90 | Yes |
| Embodiment 6 | 13.7%-70% | 18% | 1.05 | No |
| Embodiment 7 | 7.95%-70% | 3% | 0.95 | Yes |
| Embodiment 8 | 7.95%-70% | 13% | 1.05 | No |

In table 2, it can be seen from comparative examples 1-4 that if the apertures 12 are not provided in the comer area 13 of the positive electrode plate 1, a phenomenon of lithium precipitation is prone to occur on the convex surface 521 of the second bending layer 52.

As can be seen from the embodiments 1-8 that, if the value of the proportion of the aperture areas of the apertures 12 is taken according to the relational expression $(1 - \frac{A_0}{A_x} * \frac{R}{R+D_1+D_2+G}) * \frac{D1}{H} \leq$ C1/C2$\leq$70%, the phenomenon of lithium precipitation does not occur on the convex surface 521 of the second bending layer 52, and the actual NP value between the first bending layer 51 and the second bending layer 52 is greater than 1. If the value of the proportion of aperture areas of the apertures 12 is not within the relational expression, the convex surface 521 of the second bending layer 52 may have a lithium precipitation problem.

As stated above, it should be noted that the various embodiments mentioned above are only intended to explain the technical solutions of the present application, rather than limiting the technical solutions of the present application. Although the present application has been described in detail with reference to these embodiments, a person of ordinary skilled in the art should understand that, the technical solutions disclosed in the embodiments may also be amended, some technical features in the technical solutions may also be equivalently replaced. The amendments or the equivalent replacements don't cause the essence of the corresponding technical solutions to be deviated from the spirit and the scope of the technical solutions in the embodiments of the present application, and thus should all be included in the protection scope of the present application. Especially, the various technical features mentioned in the various embodiments may be combined in any manner under the condition of non-existence of structural confliction. The present application is not limited to the specific embodiments disclosed herein. Instead, the present application includes all technical solutions included within the scope of the claims.

**Claims**

1. A positive electrode plate (1) having a plurality of corner areas (13) spaced along a first direction (X), each corner area (13) forms a first bending layer (61) of an electrode assembly (10) when the positive electrode plate (1) is wound along the first direction (X);
   the positive electrode plate (1) comprises:

   a current collector (11);
   active substance layers (15) arranged on two opposite surfaces of the current collector (11);
   **characterized in that**, the first bending layer (51) is provided with a concave surface (511), in at least one of the plurality of corner areas (13), aperture(s) (12) is/are arranged on the active substance layers (15) configured to form the concave surface (511).

2. The positive electrode plate (1) according to claim 1, wherein in a corner area (13) being provided with the aperture(s) (12), a number of the aperture(s) (12) is plural, and the plurality of apertures (12) are distributed at intervals in the corner area (13) where the plurality of apertures (12) are located currently.

3. The positive electrode plate (1) according to claim 2, in each corner area (13) being provided with the apertures (12), the plurality of apertures (12) are arranged in a matrix in the corner area (13) where the plurality of apertures (12) are currently located.

4. The positive electrode plate (1) according to claim 2 or claim 3, in each corner area (13) being provided with the apertures (12), a sum of volumes of the plurality of apertures (12) is represented by V1, a volume of the active substance layers (15) in the corner area (13) is represented by V2, and V1/V2 meets a condition of $1\% \leq V1/V2 \leq 60\%$.

5. The positive electrode plate (1) according to claim 4, wherein V1/V2 also meets a condition of
   $$(1 - \frac{A_0}{A_x} * \frac{R}{R+D_1+D_2+G}) \leq V1/V2 \leq 60\%$$, wherein $A_0$ is a NP value of a straight part (4) of the electrode assembly (10), and $1.0 \leq A_0 \leq 2.0$; $A_x$ is a NP value of a bending part (5) of the electrode assembly (10) after the apertures (12) are arranged, and $1.0 \leq A_x \leq 2.0$; R is a radius of curvature of a middle part of a second bending layer (52) located on the concave surface (511) of the first bending layer (51); D1 is a thickness of each active substance layer (15) of the first bending layer (51); D2 is a thickness of each active substance layer (15) of the second bending layer (52); G is a spacing between the first bending layer (51) and the second bending layer (52).

6. The positive electrode plate (1) according to claim 2 or claim 3, in each corner area (13) being provided with the apertures (12), a sum of aperture areas of the plurality of apertures (12) on surfaces of the active substance layers (15) is represented by C1, areas of the active substance layers (15) in the corner area (13) is represented by C2, and C1/C2 meets a condition of $1\% \leq C1/C2 \leq 70\%$.

7. The positive electrode plate (1) according to claim 6, wherein C1/C2 also meets a condition of
   $$(1 - \frac{A_0}{A_x} * \frac{R}{R+D_1+D_2+G}) * \frac{D1}{H} \leq C1/C2 \leq 70\%$$, wherein $A_0$ is a NP value of a straight part (4) of the electrode assembly (10), and $1.0 \leq A_0 \leq 2.0$; $A_x$ is a NP value of a bending part (5) of the electrode assembly (10) after the apertures (12) are arranged, and $1.0 \leq A_x \leq 2.0$; R is a radius of curvature of a middle part of a second bending layer (52) located on the concave surface (511) of the first bending layer (51); D1 is a thickness of each active substance layer (15) of the first bending layer (51); D2 is a thickness of each active substance layer (15) of the second bending layer (52); G is a spacing between the first bending layer (51) and the second bending layer (52); and H is a depth of each aperture (12).

8. The positive electrode plate (1) according to any one of claims 1-7, wherein in each corner area (13) being provided with the apertures (12), a sum of aperture areas of the plurality of apertures (12) on a surface of the active substance layer (15) is represented by S, 0.000314 mm$^2$≤S≤28.26 mm$^2$.

9. The positive electrode plate (1) according to any one of claims 1-8, wherein in the corner area (13) being provided with the aperture(s) (12), a depth of each of the aperture(s) (12) on the active substance layer (15) is represented by H, a thickness of the active substance layer (15) where the aperture(s) (12) is/are located is represented by D1, H<D1.

10. An electrode assembly (10) formed by winding positive electrode plates (1), negative electrode plates (2) and diaphragms (3) arranged between the positive electrode plates (1) and the negative electrode plates (2); the electrode assembly (10) comprises bending parts (5), each bending part (5) comprises a plurality of first bending layers (51) and a plurality of second bending layers (52) which are laminated alternately, and the second bending layers (52) are configured to be formed by winding the negative electrode plates (2);
each of the positive electrode plates (1) is the positive electrode plate (1) according to any one of claims 1-9.

11. The electrode assembly (10) according to claim 10, further comprising a straight part (4), a number of the bending parts (5) is two, and the two bending parts (5) are arranged on two opposite sides of the straight part (4), respectively.

12. A secondary battery (100), **characterized in that**, the second battery (100) comprises the electrode assembly (10) according to claim 10 or claim 11.

13. An electrical device (1000), **characterized in that**, the electrical device (1000) comprises the secondary battery (100) according to claim 12.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
| --- |
| **PCT/CN2022/128353** |

**A.    CLASSIFICATION OF SUBJECT MATTER**

H01M4/13(2010.01)i;  H01M10/0587(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 正极, 卷绕, 弯折, 集流体, 活性物质层, 凹面, 孔, 电池, positive electrode, wind, bend, current collector, active material layer, concave surface, pore, battery

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114744147 A (CONTEMPORARY AMPEREX TECHNOLOGY CO., LTD.) 12 July 2022 (2022-07-12)<br>        description, paragraphs 35-131, and figures 1-11 | 1-13 |
| X | CN 114497457 A (SHANGHAI LANJUN NEW ENERGY TECHNOLOGY CO., LTD.) 13 May 2022 (2022-05-13)<br>        description, paragraphs 2 and 7-55, and figures 1-10 | 1-13 |
| X | CN 216872019 U (CONTEMPORARY AMPEREX TECHNOLOGY CO., LTD.) 01 July 2022 (2022-07-01)<br>        description, paragraphs 46-99, and figures 1-7 | 1-13 |
| X | CN 114824508 A (NINGDE AMPEREX TECHNOLOGY LIMITED) 29 July 2022 (2022-07-29)<br>        description, paragraphs 34-121, and figures 1-8 | 1-13 |
| A | JP 2013041742 A (TOYOTA INDUSTRIES CORP.) 28 February 2013 (2013-02-28)<br>        entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 July 2023** | **14 July 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/128353**

| Patent document cited in search report | | | Publication date (day/month/year) | Patent family member(s) | | | Publication date (day/month/year) |
|---|---|---|---|---|---|---|---|
| CN | 114744147 | A | 12 July 2022 | CN | 114744147 | B | 11 October 2022 |
| CN | 114497457 | A | 13 May 2022 | None | | | |
| CN | 216872019 | U | 01 July 2022 | None | | | |
| CN | 114824508 | A | 29 July 2022 | None | | | |
| JP | 2013041742 | A | 28 February 2013 | None | | | |

Form PCT/ISA/210 (patent family annex) (July 2022)